# EUROPEAN PATENT APPLICATION

(11) **EP 4 425 417 A1**
(43) Date of publication of application: **04.09.2024**
(21) Application number: 22885239.8
(22) Date of filing: 28.07.2022
(51) Int. Cl.: G06Q 50/26, G06Q 10/00, G06Q 10/06, G06Q 50/04, G06Q 10/08

(54) **CARBON EMISSIONS ACCOUNTING BOUNDARY DEFINITION METHOD AND APPARATUS FOR POWER BATTERY RECYCLING**

(30) Priority: 27.10.2021 CN 202111259413
(71) Applicant: Guangdong Brunp Recycling Technology Co., Ltd., Foshan, Guangdong 528137 (CN); Hunan Brunp Recycling Technology Co., Ltd., Changsha, Hunan 410600 (CN); Hunan Brunp EV Recycling Co., Ltd., Changsha, Hunan 410600 (CN)
(72) Inventor: YU, Haijun, Foshan, Guangdong 528137 (CN); ZHANG, Congguang, Foshan, Guangdong 528137 (CN); XIE, Yinghao, Foshan, Guangdong 528137 (CN); LI, Changdong, Foshan, Guangdong 528137 (CN)
(74) Representative: Wallinger Ricker Schlotter Tostmann
(86) International application number: PCT/CN2022/108659
(87) International publication number: WO 2023/071339

(57) **Abstract**

The present application provides a method and a device for defining carbon emission accounting boundary of recycling traction battery. The method includes: setting an overall process flowing range for a recycling of a decommissioned traction battery; according to the overall process flowing range in combination with an assessment need corresponding to carbon emission accounting, generating a boundary; according to the boundary, outputting unit processes and inventory structure corresponding to the recycling of the decommissioned traction battery. As compared to the existing technology, by defining the carbon emission accounting boundary, the present invention determines a clear and standardized system boundary, improves the accuracy of the carbon emission accounting and the full life cycle assessment of decommissioned traction batteries, and is more suitable for practical applications.

## Description

### TECHNICAL FIELD

The invention relates to the field of recycling traction battery, and in particular to a method and a device for defining carbon emission accounting boundary of recycling traction battery.

### BACKGROUND

With the development of science and technology, the application of traction batteries has become more and more extensive. The traction battery contains a variety of metal elements, if improperly handled, which may cause safety hazards and environmental pollution, and thus the traction battery is difficult to be recycled. The current life cycle assessment (LCA) of traction batteries generally defines that the recycling of traction batteries is included in the entire life cycle. However, in the existing technology, when assessing the life cycle of decommissioned traction batteries or accounting for their carbon emissions, there is often a problem of ambiguous system boundaries. The output results obtained for the same assessment need may be quite different, which has also led to errors in conclusions of some researches, and these conclusions are not realistic in the process of carbon emission accounting.

### SUMMARY OF THE INVENTION

The invention provides a method and a device for defining the carbon emission accounting boundary of recycling traction battery to solve the technical problem of ambiguous system boundaries and improve the accuracy of life cycle assessment and carbon emission accounting of decommissioned traction batteries.

In order to solve the above technical problems, embodiments of the present invention provide a method for defining carbon emission accounting boundary of recycling traction battery, including:
setting an overall process flowing range for a recycling of decommissioned traction b attery;
according to the overall process flowing range in combination with an assessment need corresponding to carbon emission accounting, generating a boundary;
according to the boundary, outputting unit processes and inventory structure corresponding to the recycling of decommissioned traction battery.

Further, the overall process flowing range is a range formed by one or combination of more of the following processes: pre-plant treatment process, transportation process, waste treatment process, in-plant physical treatment process, in-plant chemical treatment process, product formation process, and distributing-using process.

Further, according to the overall process flowing range in combination with the assessment need corresponding to carbon emission accounting, generating the boundary includes:
when the assessment need corresponding to carbon emission accounting covers only waste treatment, generating a first boundary corresponding to the assessment need by combining the pre-plant treatment process, the transportation process, and the waste treatment process in the overall process flowing range;
when the assessment need corresponding to carbon emission accounting covers copper and aluminum metals obtainment, plastic casings obtainment, or raw materials preparation for chemical extraction, generating a second boundary corresponding to the assessment need by combining the pre-plant treatment process, the transportation process, the waste treatment process and the in-plant physical process in the overall process flowing range;
when the assessment need corresponding to carbon emission accounting covers metal elements recycling, supply of raw materials for preparation of precursors, or supply of raw materials for preparing cathode materials, generating a third boundary corresponding to the assessment need by combining the pre-plant treatment process, the transportation process, the waste treatment process, the in-plant physical treatment process and the in-plant chemical treatment process in the overall process flowing range ;
when the assessment need corresponding to carbon emission accounting covers manufacture of regenerated batteries, generating a fourth boundary corresponding to the assessment need by combining the pre-plant treatment process, the transportation process, the waste treatment process, the in-plant physical treatment process, the in-plant chemical treatment process, and the product formation process in the overall process flowing range;
when the assessment need corresponding to carbon emission accounting covers manufacture of regenerated batteries and putting them on market, generating a fifth boundary corresponding to the assessment need by combining the pre-plant treatment process, the transportation process, the waste treatment process, the in-plant physical treatment process, the in-plant chemical treatment process, the product formation process and the distributing-using process in the overall process flowing range.

Further, according to the boundary, outputting the unit processes and inventory structure corresponding to the recycling of the decommissioned traction battery includes:
when the boundary is the first boundary, outputting a first transportation process information and a waste treatment process information;
when the boundary is the second boundary, outputting a second transportation process information, a second waste treatment process information, and a second in-plant physical treatment process information;
when the boundary is the third boundary, outputting a third transportation process information, a third waste treatment process information, a third in-plant physical treatment process information, and a third in-plant chemical treatment process information;
when the boundary is the fourth boundary, outputting a fourth transportation process information, a fourth waste treatment process information, a fourth in-plant physical treatment process information, a fourth in-plant chemical treatment process information, and a fourth product formation process information;
when the boundary is the fifth boundary, outputting a fifth transportation process information, a fifth waste treatment process information, a fifth in-plant physical treatment process information, a fifth in-plant chemical treatment process information, a fifth product formation process information, and a fifth distributing-using process information.

Further, the transportation process information corresponding to the decommissioned traction battery includes: within and outside the plant, scope of transportation, transportation means, fuel type, and fuel consumption per 100 kilometers; and the waste treatment process information corresponding to the decommissioned traction battery includes: a waste treatment method, a waste recycling method, a standardized waste discharge method, parameter information of required equipment and input-output logistics information.

Further, the in-plant physical treatment process information corresponding to the decommissioned traction battery includes information of equipment for discharge, heat treatment, shredding, sorting, and mechanical disassembly processes; and input-output data of materials and first energy for a first functional unit.

Further, the in-plant chemical treatment process information corresponding to the decommissioned traction battery includes information of equipment for leaching, chemical purification, extraction purification, crystallization, liquid preparation, reaction, filtration and washing, drying, foreign matter separation, and high-temperature calcination processes; and input-output data of materials and second energy for a second functional unit.

Further, the product formation process information corresponding to the decommissioned traction battery includes product package materials, product packing materials, and program information of pelletizing.

Further, the distributing-using process information corresponding to the decommissioned traction battery includes logistics information of product distributing-using, and information of carbon emissions caused by loading weight of the traction battery.

Correspondingly, an embodiment of the present invention also provides a device for defining carbon emission accounting boundary of recycling traction battery, including a range setting unit, a boundary determination unit, and an information output unit

The range setting unit sets the overall process flowing range for a recycling of the decommissioned traction battery; the overall process flowing range is a range formed by one or combination of more of the following processes: a pre-processing process, a transportation process, a waste treatment process, an in-plant physical treatment process, an in-plant chemical treatment process, a product formation process and a distributing-using process.

The boundary determination unit is configured to generate a corresponding boundary according to the overall process flowing range in combination with an assessment need corresponding to carbon emission accounting.

The information output unit is configured to output unit processes and inventory structure corresponding to the recycling of the decommissioned traction battery according to the boundary.

Compared with the existing technology, the embodiments of the present invention have the following beneficial effects:

The present invention provides a method and a device for defining carbon emission accounting boundary of recycling traction battery. The method includes: setting an overall process flowing range for the recycling of decommissioned traction battery; according to the overall process flowing range in combination with an assessment need corresponding to carbon emission accounting, a boundary is generated; according to the boundary, unit process and inventory structure corresponding to the recycling of the decommissioned traction battery are output. As compared to the existing technology, by defining the carbon emission accounting boundary, the present invention determines a clear and standardized system boundary, improves the accuracy of the carbon emission accounting and the full life cycle assessment of decommissioned traction batteries, and is more suitable for practical applications.

### BRIEF DESCRIPTION OF DRAWINGS

Fig. 1 is a schematic flow chart of an embodiment of the method for defining the carbon emission accounting boundary of recycling traction battery provided by the present invention.
Fig. 2 is a schematic structural diagram of an embodiment of the device for calculating the carbon emission accounting boundary for the traction battery recycling provided by the present invention.

### DETAILED DESCRIPTION

The technical solutions in the embodiments of the present invention will be clearly and completely described below in conjunction with the accompanying drawings in the embodiments of the present invention. Obviously, the described embodiments are only part of the embodiments of the present invention, rather than all the embodiments. Based on the disclosed embodiments, all other embodiments obtained by those of ordinary skill in the art without creative work shall fall within the protection scope of the present invention.

### Embodiment Example 1:

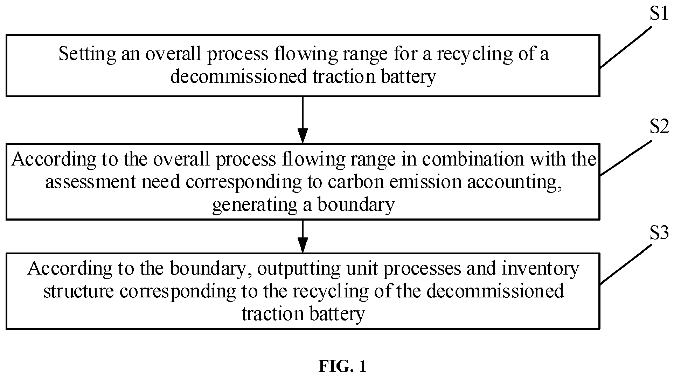

Referring to Fig. 1, which illustrates a method for defining carbon emission accounting boundary of recycling traction battery according to an embodiment of the present invention, including steps S1 to S3 as follows.

Step S 1, setting an overall process flowing range for a recycling of a decommissioned traction battery;

In this embodiment, the overall process flowing range is formed by one or combination of more of the following processes: pre-plant treatment process, transportation process, waste treatment process, in-plant physical treatment process, and in-plant chemical treatment process, product formation process and distributing-using process.

In this embodiment, the pre-plant treatment process includes the following steps:
confirming, registering, archiving, and back-upping accordingly the type of the decommissioned traction battery product to be picked up and the type of a corresponding vehicle loaded with the battery;
checking whether there is leakage of electricity or insulation failure, if yes, performing insulation treatment or safe discharging until the voltage is lower than 1.5V;
checking whether the electrolyte is leaking, if yes, cutting off a leaking source, collecting the electrolyte and eliminating risk of leakage by using a special anti-leakage packaging box or adopting effective anti-leakage measures;
checking whether there is a trace of fire or smoke, if yes, placing the batteries in isolation; carrying out packing and transportation after the danger is lifted, or unpacking inspection to eliminate the risk;
checking whether there are any signs of water immersion, if yes, determining the degree of safety risk of immersion, and performing air-dry or eliminating the risk;
checking the battery parameters such as battery temperature and voltage to determine whether they exceed the safety limit conditions specified by the manufacturer; if yes, placing the battery in isolation and subjecting it to packing and transportation after the danger is removed.

In this embodiment, the transportation process includes the following steps:
determining the transportation time, location, docking information, handover method and transportation plan;
adopting a transportation company with qualifications and rich experience in the transportation of dangerous goods;
installing fire and smoke detectors (a wireless connector is installed in the cab to monitor the condition inside the vehicle), and turning on GPS to remotely monitor the condition of the vehicle;
developing emergency plans, strictly controlling vehicle loads, and communicating with vehicle transportation personnel at predetermined intervals.

In this embodiment, the in-plant physical treatment process includes the following steps:
after picking up, storing, dismantling, and reusing the decommissioned traction battery according to specific needs or business requirements; where the reusing includes echelon utilization and recycling;
after discharging, cutting the shell of battery, and then wet shredding and sorting to obtain iron, copper, aluminum, carbon powder and a mixture of cathode and anode electrodes;
recycling the iron, copper, aluminum, and carbon powder, and pyrolyzing the mixture of cathode and anode electrodes;
according to different degrees of pyrolyzing, carrying out the process of shredding, screening, magnetic separation, dehydration or secondary combustion, preliminary dust removal, cooling, deacidification, bag dust removal and re-acid removal respectively to obtain a pyrolysis slag.

In this embodiment, the in-plant chemical treatment process is mainly to obtain valuable metals such as cobalt, nickel, lithium, and manganese through wet method or fire method.

In this embodiment, the product formation process includes: preparing cathode and anode electrodes materials, coating of the cathode and anode electrodes, sheeting of the cathode and anode electrodes, oven drying with the separator, winding, short circuit testing, shelling, rolling groove, filling electrolyte, formation, capacity grading and packaging to obtain a final battery product.

The distributing-using process includes delivering battery products to consumers or downstream customers through different logistics methods and sales channels.

In this embodiment, the waste treatment process includes the following step:
disposing solid, liquid and gaseous waste generated by each process in accordance with relevant waste treatment requirements and standards.

Step S2, according to the overall process flowing range in combination with the assessment need corresponding to carbon emission accounting, generating a boundary.

In this embodiment, the boundary is generated according to the overall process flowing range in combination with the assessment need corresponding to carbon emission accounting, including:
when the assessment need corresponding to carbon emission accounting covers only waste treatment, generating a first boundary corresponding to the assessment need by combining the pre-plant treatment process, the transportation process, and the waste treatment process in the overall process flowing range;
when the assessment need corresponding to carbon emission accounting covers copper and aluminum metals obtainment, plastic casings obtainment, preparation of raw materials for chemical extraction, generating a second boundary corresponding to the assessment need by combining the pre-plant treatment process, the transportation process, the waste treatment process and the in-plant physics in the overall process flowing range;
when the assessment need corresponding to carbon emission accounting covers metal elements recycling, supply of raw materials for preparing precursors, or supply of raw materials for preparing cathode materials, generating a third boundary corresponding to the assessment need by combining the pre-plant treatment process, the transportation process, the waste treatment process, the in-plant physical treatment process and the in-plant chemical treatment process in the overall process flowing range;
when the assessment need corresponding to carbon emission accounting is manufacture of regenerated batteries, generating a fourth boundary corresponding to the assessment need by combining the pre-plant treatment process, the transportation process, the waste treatment process, the in-plant physical treatment process, the in-plant chemical treatment process, and the product formation process in the overall process;
when the assessment need corresponding to carbon emission accounting covers manufacture of regenerated batteries and putting them on market, generating a fifth boundary corresponding to the assessment need by combining the pre-plant treatment process, the transportation process, the waste treatment process, the in-plant physical treatment process, the in-plant chemical treatment process, the product formation process and the distributing-using process in the overall process flowing range.

Step S3, according to the boundary, outputting unit processes and inventory structure corresponding to the recycling of the decommissioned traction battery.

In this embodiment, when the boundary is the first boundary, outputting a first transportation process information and a waste treatment process information.

The transportation process information corresponding to the decommissioned traction battery includes: scope of transportation inside and outside the plant, transportation means, fuel type, and fuel consumption per 100 kilometers; and the waste treatment process information corresponding to the decommissioned traction battery includes: waste treatment method and waste recycling method, standardized waste discharge method, parameter information of the required equipment and input-output logistics information.

When the boundary is the second boundary, outputting a second transportation process information, a second waste treatment process information, and a second in-plant physical treatment process information are output.

The in-plant physical processing information corresponding to the decommissioned traction battery includes: information of equipment for discharge, heat treatment, shredding, sorting, and mechanical disassembly processes; and input-output data of materials and first energy for a first functional unit.

When the boundary is the third boundary, outputting a third transportation process information, a third waste treatment process information, a third in-plant physical treatment process information, and a third in-plant chemical treatment process information.

The in-plant chemical treatment process information corresponding to the decommissioned traction battery includes: information of equipment for leaching, chemical purification, extraction purification, crystallization, liquid preparation, reaction, filtration and washing, drying, foreign matter separation, high-temperature calcination processes; and input-output data of materials and second energy for a second functional unit.

When the boundary is the fourth boundary, outputting a fourth transportation process information, a fourth waste treatment process information, a fourth in-plant physical treatment process information, a fourth in-plant chemical treatment process information, and a fourth product formation process information.

The product formation process information corresponding to the decommissioned traction battery includes product packaging materials, product packing materials, and program information of pelletizing.

When the boundary is the fifth boundary, outputting a fifth transportation process information, a fifth waste treatment process information, a fifth in-plant physical treatment process information, a fifth in-plant chemical treatment process information, a fifth product formation process information, and a fifth distributing-using process information.

The distributing-using process information corresponding to the decommissioned traction battery includes product distributing-using logistics information (this information is mainly determined based on the logistics model of new energy vehicles, such as the national standard "Building Carbon Emission Calculation Standard" issued by the Ministry of Housing and Urban-Rural Development (No. GB /T51366-2019) on the calculation method of transportation distribution, to determine the average transportation distance and average transportation weight of the product produced, that is, to determine the average ton*km value of the product, in addition to determine the vehicles types for the transportation, including 2 ton, 5 ton light vehicles, 10 ton heavy vehicles, 15 ton heavy vehicles, etc.), and information of carbon emission caused by loading weight of the traction battery.

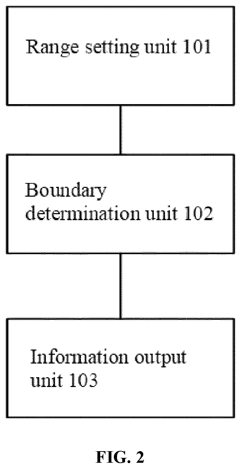

Correspondingly, referring to Fig. 2, which illustrates a schematic structural diagram of a device for defining carbon emission accounting boundary for traction battery recycling according to an embodiment of the present invention, including a range setting unit 101, a boundary determination unit 102, and an information output unit 103.

The range setting unit 101 sets an overall process flowing range for the recycling of decommissioned traction batteries; the overall process flowing range is a range formed by one or combination of more of the following processes: a pre-plant treatment process, a transportation process, a waste treatment process, an in-plant physical treatment process, an in-plant chemical treatment process, a product formation process and a distributing-using process;

The boundary determination unit 102 is to generate a corresponding boundary according to the overall process flowing range in combination with the assessment need corresponding to carbon emission accounting;

The information output unit 103 is to output unit processes and inventory structure corresponding to the recycling of the decommissioned traction battery according to the boundary.

Compared with the existing technology, the embodiments of the present invention have the following beneficial effects:

The present invention provides a method and a device for defining carbon emission accounting boundary for recycling of traction batteries. The defining method includes: setting an overall process flowing range for the recycling of decommissioned traction battery; according to the overall process flowing range in combination with the assessment need corresponding to carbon emission accounting, a boundary is generated; according to the boundary, the unit processes and inventory structure corresponding to the recycling of the decommissioned traction battery are output. As compared to the existing technology, by defining the carbon emission accounting boundary, the present invention determines a clear and standardized system boundary, improves the accuracy of carbon emission accounting and full life cycle assessment of decommissioned traction batteries, and is more suitable for practical applications.

### Embodiment 2

According to the method for defining the carbon emission accounting boundary of recycling traction battery according to the present invention, an embodiment (embodiment 2) is also provided, which includes the following steps:

Step S1, setting an overall process flowing range for a recycling of a decommissioned traction battery;

In this embodiment, the scope of the overall process flowing includes seven processes in the full life cycle of a recycling technology of decommissioned traction battery, namely: a pre-plant treatment process, a transportation process, a waste treatment process, an in-plant physical treatment process, an in-plant chemical treatment process, a product formation process and a distributing-using process.

Step S2, according to the overall process flowing range in combination with an assessment need corresponding to carbon emission accounting, a boundary is generated;

In this embodiment, because it is for the assessment of lithium iron phosphate cathode material products, a fourth boundary is selected, which includes: a pre-plant treatment process, a transportation process, a waste treatment process, an in-plant physical treatment process, an in-plant chemical treatment process and a product formation process. The purpose corresponding to this boundary is to use recycled metal raw materials to prepare lithium iron phosphate cathode material products.

Step S3, according to the boundary, unit processes and inventory structure corresponding to the recycling of the decommissioned traction battery are output.

In this embodiment, the transportation process within the boundary range only includes the transportation range outside the factory. Assuming that the average transportation distance of the decommissioned batteries is 500 km, and a Xichai 4110 diesel vehicle is used for transportation, the average fuel consumption per 100 kilometers of this vehicle is 12-14 liters. The waste treatment process includes treating, mixing, calcinating and other processes of the waste liquid, waste gas and solid waste. These processes will produce carbon-containing organic compounds mainly comprising Li element, CO₂, CO, ammonia, sulfide, ammonium hydrogen phosphate and sucrose, etc. The carbon-containing organic compounds are mainly discharged in the form of gas, after being treated for harmless disposal according to environmental protection requirements. Wastewater is processed by a third-party service provider.

At the same time, it is also necessary to consider the in-plant physical treatment process information of the waste batteries, such as the information of equipment for processes of discharging, heat treatment, shredding, sorting, mechanical disassembly, etc., and input-output data of materials and energy for each functional unit. It is also necessary to consider the in-plant chemical treatment process information including leaching, chemical purification, extraction purification, crystallization, liquid preparation, reaction, filter washing, drying, foreign matter separation, high temperature calcination, etc., and input-output of materials and energy for each functional unit, etc.;

According to statistics, on average, for every kWh of the recycling of waste ternary lithium battery, the materials that need to be input include:

| Material | Unit | Dosage |
|---|---|---|
| Sodium chloride | g | 67.5 |
| Water | kg | 83.1 |
| Sulfuric acid | kg | 1.27 |
| Bis(2-ethylhexyl) hydrogen phosphate | kg | 0.00394 |
| 2-ethylhexyl phosphonic acid-mono-2-ethylhexylester | kg | 0.00145 |
| Sulfonated kerosene | kg | 0.0137 |
| Sodium sulfide | kg | 0.0133 |
| Liquid alkali | kg | 0.884 |
| Aqueous Ammonia | kg | 0.0417 |

According to statistics, on average, for every kWh of the recycling of waste ternary lithium battery, the energy input required is 0.0186 kWh of electricity and 12 kg of steam.

According to statistics, on average, for every kWh of the recycling of waste ternary lithium battery, the produced emission inventory is shown in the following table:

| Discharge type | Discharge pollutant name | Unit | Discharge amount |
|---|---|---|---|
| Air pollutant | Dust | g | 0.238 |
| | Hydrogen Fluoride | g | 0.0438 |
| | Sulfuric acid mist | g | 0.0375 |
| | Hydrogen sulfide | g | 0.0229 |
| | Ammonia | g | 0.0859 |
| Water pollutant | Chemical Oxygen Demand | g | 10.3 |
| | Suspended solids | g | 124 |
| | Biological oxygen demand | g | 3.64 |
| | Nickel | g | 0.0475 |
| | Cobalt | g | 0.0438 |
| | Manganese | g | 0.0475 |
| | Lithium | g | 3.98 |
| | Ammonia nitrogen | g | 0.596 |

Compared with the existing technology, the embodiments of the present invention have the following beneficial effects:

the embodiment of the present invention provides a method for defining the carbon emission accounting boundary of recycling traction battery. The method includes: setting an overall process flowing range for a recycling of a decommissioned traction battery; according to the overall process flowing range in combination with the assessment need corresponding to carbon emission accounting, a boundary is generated; according to the boundary, the unit processes and inventory structure corresponding to the recycling of the decommissioned traction battery are output. As compared to the existing technology, by defining the carbon emission accounting boundary, the present invention determines a clear and standardized system boundary, improves the accuracy of carbon emission accounting and full life cycle assessment of decommissioned traction batteries, and is more suitable for practical applications.

The specific embodiments described above provide a further detailed description of the purpose, technical solutions and beneficial effects of the present invention. It should be understood that the above are only specific embodiments of the present invention and are not intended to limit the protection scope of the present invention. In particular, for those skilled in the art, any modification, equivalent replacement, improvement, etc. made within the spirit and principle of the present invention should be included in the protection scope of the present invention.

## Claims

1. A method for defining carbon emission accounting boundary of recycling traction battery, comprising:
setting an overall process flowing range for a recycling of a decommissioned traction b attery;
according to the overall process flowing range in combination with an assessment need corresponding to carbon emission accounting, generating a boundary;
according to the boundary, outputting unit processes and inventory structure corresponding to the recycling of the decommissioned traction battery.

2. The method for defining the carbon emission accounting boundary of recycling traction battery according to claim 1, wherein the overall process flowing range is a range formed by one or combination of more of the following processes: a pre-plant treatment process, a transportation process, a waste treatment process, an in-plant physical treatment process, an in-plant chemical treatment process, a product formation process, and a distributing-using process.

3. The method for defining the carbon emission accounting boundary of recycling traction battery according to claim 2, wherein, according to the overall process flowing range in combination with the assessment need corresponding to carbon emission accounting, generating the boundary comprises:
when the assessment need corresponding to carbon emission accounting covers only waste treatment, generating a first boundary corresponding to the assessment need by combining the pre-plant treatment process, the transportation process and the waste treatment process in the overall process flowing range;
when the assessment need corresponding to carbon emission accounting covers copper and aluminum metals obtainment, plastic casings obtainment, or preparation of raw materials for chemical extraction, generating a second boundary corresponding to the assessment need by combining the pre-plant treatment process, the transportation process, the waste treatment process and the in-plant physical treatment process in the overall process flowing range;
when the assessment need corresponding to carbon emission accounting covers recycling of metal elements, supply of raw materials for preparing precursors, or supply of raw materials for preparing cathode materials, generating a third boundary corresponding to the assessment need by combining the pre-plant treatment process, the transportation process, the waste treatment process, the in-plant physical treatment process and the in-plant chemical treatment process in the overall process flowing range;
when the assessment need corresponding to carbon emission accounting covers manufacture of regenerated batteries, generating a fourth boundary corresponding to the assessment need by combining the pre-plant treatment process, the transportation process, the waste treatment process, the in-plant physical treatment process, the in-plant chemical treatment process and the product formation process in the overall process flowing range; and
when the assessment need corresponding to carbon emission accounting covers manufacture of regenerated batteries and putting them on market, generating a fifth boundary corresponding to the assessment need by combining the pre-plant treatment process, the transportation process, the waste treatment process, the in-plant physical treatment process, the in-plant chemical treatment process, the product formation process and the distributing-using process in the overall process flowing range.

4. The method for defining the carbon emission accounting boundary of recycling traction battery according to claim 3, wherein, according to the boundary, outputting the unit processes and inventory structure corresponding to the recycling of the decommissioned traction battery comprises:
when the boundary is the first boundary, outputting a first transportation process information and a waste treatment process information;
when the boundary is the second boundary, outputting a second transportation process information, a second waste treatment process information, and a second in-plant physical treatment process information;
when the boundary is the third boundary, outputting a third transportation process information, a third waste treatment process information, a third in-plant physical treatment process information, and a third in-plant chemical treatment process information;
when the boundary is the fourth boundary, outputting a fourth transportation process information, a fourth waste treatment process information, a fourth in-plant physical treatment process information, a fourth in-plant chemical treatment process information, and a fourth product formation process information; and
when the boundary is the fifth boundary, outputting a fifth transportation process information, a fifth waste treatment process information, a fifth in-plant physical treatment process information, a fifth in-plant chemical treatment process information, a fifth product formation process information, and a fifth distributing-using process information.

5. The method for defining the carbon emission accounting boundary of recycling traction battery according to claim 4, wherein the transportation process information corresponding to the decommissioned traction battery comprises: within and outside the plant, scope of transportation, transportation means, fuel type, and fuel consumption per hundred kilometers; and the waste treatment process information corresponding to the decommissioned traction battery comprises: a waste treatment method, a waste recycling method, a standardized waste discharge method, parameter information of required equipment and input-output logistics information.

6. The method for defining the carbon emission accounting boundary of recycling traction battery according to claim 4, wherein the in-plant physical treatment process information corresponding to the decommissioned traction battery comprises:
information of equipment for discharge, heat treatment, shredding, sorting, mechanical disassembly processes; and
input-output data of materials and first energy for a first functional unit.

7. The method for defining the carbon emission accounting boundary of recycling traction battery according to claim 4, wherein the in-plant chemical treatment process information corresponding to the decommissioned traction battery comprises:
information of equipment for leaching, chemical purification, extraction purification, crystallization, liquid preparation, reaction, filtration and washing, drying, foreign matter separation, calcination processes; and
input-output data of materials and second energy for a second functional unit.

8. The method for defining the carbon emission accounting boundary of recycling traction battery according to claim 4, wherein the product formation process information corresponding to the decommissioned traction battery comprises product packaging materials, product packing materials, and program information of pelletizing.

9. The method for defining the carbon emission accounting boundary of recycling traction battery according to claim 4, wherein the distributing-using process information corresponding to the decommissioned traction battery comprises logistics information of product distributing-using, and information of carbon emissions caused by loading weight of the traction battery.

10. A device for defining carbon emission accounting boundary of recycling traction battery, comprising a range setting unit, a boundary determination unit and an information output unit,
wherein the range setting unit is configured to set an overall process flowing range for a recycling of decommissioned traction battery; the overall process flowing range is a range formed by one or combination of more of the following processes: a pre-plant treatment process, a transportation process, a waste treatment process, an in-plant physical treatment process, an in-plant chemical treatment process, a product formation process and a distributing-using process;
the boundary determination unit is configured to generate a boundary according to the overall process flowing range in combination with an assessment need corresponding to carbon emission accounting; and
the information output unit is configured to output unit processes and inventory structure corresponding to the recycling of decommissioned traction battery according to the boundary.
